Europäisches Patentamt

European Patent Office

Office européen des brevets

(11) Publication number: **0 181 389**
**B1**

(12) **EUROPEAN PATENT SPECIFICATION**

(45) Date of publication of patent specification: **27.04.88**

(51) Int. Cl.⁴: **C 09 K 7/04**

(21) Application number: **85902684.1**

(22) Date of filing: **08.05.85**

(86) International application number:
**PCT/NO85/00025**

(87) International publication number:
**WO 85/05118 21.11.85 Gazette 85/25**

(54) **DRILLING FLUID.**

<table>
<tr><td>

(30) Priority: **09.05.84 NO 841845**
**11.07.84 NO 842810**
**18.12.84 NO 845070**
**25.04.85 NO 851670**

(43) Date of publication of application:
**21.05.86 Bulletin 86/21**

(45) Publication of the grant of the patent:
**27.04.88 Bulletin 88/17**

(84) Designated Contracting States:
**DE FR GB IT NL SE**

(56) References cited:
**EP-A-0 119 745**
**NO-B- 134 469**
**SE-B-72 103 492**
**US-A-1 663 492**
**US-A-2 276 075**
**US-A-3 214 373**
**US-A-3 216 933**

</td><td>

(73) Proprietor: **FARSTAD, Otto**
**Boks 26**
**N-6401 Molde (NO)**

(72) Inventor: **FARSTAD, Otto**
**Boks 26**
**N-6401 Molde (NO)**

(74) Representative: **van der Beek, George Frans et al**
**Nederlandsch Octrooibureau Johan de Wittlaan 15 P.O. Box 29720**
**NL-2502 LS 's-Gravenhage (NL)**

</td></tr>
</table>

Courier Press, Leamington Spa, England.

# 0 181 389

## Description

The invention relates to a drilling fluid containing weighting material including particles of one or more metals for drilling of wells in subterranean formations.

Such a process is known from US—A—3 216 933. According to this process the occurrence of differentially stuck drill pipe is prevented in drilling operations wherein a well is being drilled into a formation using a liquid drilling fluid and wherein there is a pronounced tendency for said pipe to become stuck to the wall of said well. As examples of particles of metals steel shot and aluminum shot ranging in size from about 10 to about 40 mesh (0.42 to 2.00 mm) are mentioned. It is stated in this patent that the larger the particles, the more effective they are. It should be noted that instead of steel shot or aluminum shot also sand, walnut shells, plastic and the like may be used.

It is known from US—A—3 713 499 to use ferrous abrasive particles in drilling muds. According to this publication a drilling mud discharged from a well in an abrasive jet drilling process is treated to recondition the drilling mud. The abrasive particles are separated from this drilling mud and mixed with fresh drilling mud liquids at a controlled rate to form a drilling mud for recirculating to the well. Abrasive particles having a size of 20—50 mesh (0.297—0.84 mm) are preferred.

By drilling in subterranean formations it is known to add a weight material to the drilling fluid to counteract or partly counteract the great pressure that can be present in such formations, especially at great depths, and also to increase the buoyancy of the drilling equipment that is present in the drilling fluid.

In this connection different minerals are today used as weight material, for example barite, ilmenite etc., which is ground to a suitable granulate consistency and forms a part of the drilling mud. The properties of these minerals in proportion to the general functions of the drilling fluid can vary, and especially they can involve great wear and tear in the pumps and pipe installations the drilling fluid is led through on the way to and from the well.

It is also known to supply iron as a weight material for later to remove it from the drilling fluid by magnetic means for reusing the iron. This is for example known from US patent No. 1663492 and US patent No. 2276075.

Even if the recovering of iron particles is simplified by use of magnetism and the necessary equipment for such recovery is considerably less space demanding than corresponding equipment for mineralic weight material, there are still great problems with tear and wear of pumps, valves and other pipe installations.

These problems are avoided according to the present invention. Accordingly, the present invention relates to a drilling fluid as mentioned in the preamble, which is characterized in that the weighting material includes pearl-shaped and/or ball-shaped particles of one or more metals and/or metal alloys, including iron and steel, the diameter of the particles being less than 250 μm.

By help of the weight material according to the invention, it is not only attained that this can be drawn out of the drilling mud by magnetism, but also that the tear and wear of pumps, valves and other pipe installations to a great extent is reduced because of the shape of the particles.

It has also shown that the shape of the particles, according to the invention, gives the drilling mud a ball bearing-like effect by sidework of the drill string, which particularly is of great importance in deviation drilling.

Experiments have shown that drilling mud with weight material according to the invention has good rheological properties, because the steel-spheres are stably suspended in the drilling mud.

During the drilling process the particles, according to the invention, are exposed to minimal grinding because of the particles own strength and shape.

The weight material according to the invention, can include particles of one or more metals, metal alloys or combinations. It is especially suitable that the particles are shaped as pearls (pellets) or balls.

The particles can suitably be produced of stainless steel so that the particles are not exposed to corrosion and thus give the possibility for use in a longer period by regaining for example by the help of magnetism.

The spheres can also, however, be produced of usual soft steel and it can then be suitable to mix corresponding particles of zinc with the weight material, but in a less amount based on volume. These zinc particles can be pearl-shaped (pellet) and for example be produced by electronic evaporation and condensation. Pearl-shaped zinc particles can however, also be produced by liquid automizing or by mechanical automizing. Further the zinc particles can be produced with ball-shape by gas-atomizing. It is suitable that the diameter of the zinc-particles is less than 250 μm. Zinc particles can be mixed both with particles of soft steel and stainless steel to thus give cathodic protection of pipe installations in the mud system.

The weight material of metal particles of soft steel or stainless steel can have pearl-shape (pellet) and ball-shape. Pearl-shaped particles can be produced by fluid-automizing or mechanical automizing, while the ball-shaped particles can be formed by gas automizing. Particles of other alloys with peearl-shape or ball-shape or mixtures of different alloys, can also be suitable. The diameter of the pearls is preferably between 15 and 75 μm.

An improvement of the floating properties of the particles in the drilling fluid can be gained by coating the surface of the particles with chemicals. An improvement of the floating properties can also be gained

2

for example by deforming the larger particles from ball-form respectively pearl-form to approximately ellipsoides.

It has been carried out comparative experiments with particles according to the invention, barite and ilmenite. Here the rheological properties, floating properties and tear and wear are examined for drilling fluids with different viscosities, see table 1 and 2.

In table 1 the results of measuring viscosity by 600, 300, 200 and 100 cycl./min. are set up. Values for the plastic viscosity PV and the floating limit (yield point) YP are also marked. The measurements were carried out for base mud with average viscosity, AV, of 5, 6,5, 8 and 10 mPas. As weight material according to the invention there was used steel-balls produced by Uddeholm Stainless AB, Sweden, with fractions less than 150 μm and less than 20 μm. In addition experiments were carried out with a mixture of these two fractions and also a mixture with a fraction less than 20 μm and a fraction between 44 and 80 μm. These mixtures were all carried out by 50/50%. The experiments were carried out by baroid rheometer. The base mud consisted of bentonite prehydrated in distilled water.

Table 2 shows measurements of stability during time of the before mentioned weight materials, where the percentage water at the top and percentage precipitate were measured after 72 h.

From table 1 it appears that the weight material with particles according to the invention gives rheological properties that can be compared with barite and ilmenite. Table 2 shows that the steel-balls are stably suspended in the mud.

It was further made experiments to measure tear and wear of two fractions, less than 150 μm and 44 to 80 μm. The tear and wear for fractions less than 150 μm was measured to 0,6 mg/min, and for 44 to 80 μm 1.0 to 1.6 mg/min. Earlier corresponding examinations of tear and wear have shown that ilmenite gives between 4.0 and 6.0 mg/min, while barite is in the order of 0.6 and 1.0 mg/min.

On the basis of the experiments of tear and wear it is expected that the tear and wear of pumps and other pipe installations will be in the same order by use of barite and steel-balls as weight material. One further expect that the grinding of the steel-balls during drilling will be minimal because of the strength and shape of the balls and that the balls will have great advantages because they to a great extent can be regained in a simple way.

TABLE 1

RHEOLOGICAL PROPERTIES

| Weight material | Basemud AV mPas | | | | | | | Remarks |
|---|---|---|---|---|---|---|---|---|
| | | 600 | 300 | 200 | 100 | PV | YP | |
| <150 μm | 5 | 19 | 10 | 7 | 5 | 9 | 1 | Separates quite much |
| <20 μm | 5 | 32 | 16 | 10 | 7 | 16 | 0 | |
| Barite | 5 | 31 | 16 | 10 | 7 | 15 | 1 | |
| Ilmenite | 5 | 23 | 11 | 7 | 6 | 12 | −1 | |
| 50/50% 0<20 μm/<150 μm | 6,5 | 40 | 20 | 13 | 7 | 20 | 0 | |
| <20 μm | 6,5 | 41 | 20,5 | 13 | 7 | 20,5 | 0 | |
| Barite | 6,5 | 44 | 23 | 15 | 8 | 21 | 2 | |
| Ilmenite | 6,5 | 39 | 22 | 15 | 10 | 17 | 5 | |
| 50/50%=<20 μm/44—80 μm | 8 | 41 | 23 | 16 | 10 | 18 | 5 | |
| <150 μm | 8 | 41 | 21 | 14 | 9 | 20 | 1 | |
| <20 μm | 8 | 44 | 23 | 16 | 9 | 21 | 2 | |
| Barite | 8 | 44 | 23 | 16 | 8 | 21 | 2 | |
| Ilmenite | 8 | 41 | 22 | 16 | 10 | 19 | 3 | |
| <150 μm | 10 | 54 | 31 | 19 | 13 | 23 | 8 | |
| 50/50%=<20 μm/44—80 μm | 10 | 52 | 26 | 19 | 10 | 26 | 0 | |
| Barite | 10 | 62 | 34 | 25 | 14 | 28 | 6 | |

3

TABLE 2

STABILITY DURING TIME (72 HOURS)

| Weight material | Basemud AV cp | % water at the top | % precipitation | Remarks |
|---|---|---|---|---|
| 50/50%=<20 µm/<150 µm | 6,5 | 8 | 8 | Easy to stir |
| <20 µm | 6,5 | 14 | 0 | Worse to stir |
| Barite | 6,5 | 10 | ca. 5 (bad passage) | Worse to stir |
| Ilmenite | 6,5 | 0 | 0 | Very easy to stir |
| 50/50%=<20 µm/44—80 µm | 8 | 17 | 5 | Easy to stir |
| <150 µm | 8 | 2 | 11 | Worse to stir |
| <20 µm | 8 | 10 | 0 | Easy to stir |
| Barite | 8 | 7 | 0 | Easy to stir |
| Ilmenite | 8 | 0 | 0 | Very easy to stir |
| <150 µm | 10 | 0 | 0 | Very easy to stir |
| 50/50%=<20 µm/44—80 µm | 10 | 0 | 0 | Very easy to stir |
| Barite | 10 | 5 | 0 | Easy to stir |

**Claims**

1. A drilling fluid containing weighting material including particles of one or more metals for drilling of wells in subterranean formations, characterized in that the weighting material includes pearl-shaped and/or ball-shaped particles of one or more metals and/or metal alloys, including iron and steel, the diameter of the particles being less than 250 µm.

2. Drilling fluid according to claim 1, characterized in that the weighting material includes zinc particles and a greater part based on volume of at least one other metal.

3. Drilling fluid according to claim 2, characterized in that the diameter of the zinc particles is less than 250 µm.

4. Drilling fluid according to claim 2 or 3, characterized in that the zinc particles are shaped as pearls (pellets) and are produced by electrostatic evaporation and condensation.

5. Drilling fluid according to claim 2 or 3, characterized in that the zinc particles are shaped as ellipsoides and are produced by pressing together particles shaped as pearls (pellets).

6. Drilling fluid according to any of the claims 1—3, characterized in that the pearl-shaped particles are produced by fluid atomizing.

7. Drilling fluid according to any of the claims 1—3, characterized in that the pearl-shaped particles are produced by mechanical atomizing.

8. Drilling fluid according to claim 6 or 7, characterized in that the pearl-shaped particles, after being produced, are pressed together to an ellipsoidic form.

9. Drilling fluid according to any of the claims 1—3, characterized in that the ball-shaped particles are produced by atomizing with gases, including steam.

10. Drilling fluid according to any of the claims 1—3, characterized in that the ball-shaped particles are pressed together to an ellipsoidic shape.

11. Drilling fluid according to claim 1 or 2, characterized in that the diameter of the particles is between 15 and 75 µm.

12. Drilling fluid according to any of the preceding claims, characterized in that the surface of the metal particles is coated with chemicals to improve the floating properties of the particles.

**0 181 389**

## Patentansprüche

1. Bohrflüssigkeit zum Bohren von Bohrlöchern in unterirdischen Formationen, welche Bohrflüssigkeit Teilchen aus einem oder mehreren Metallen umfassendes schwergewichtiges Material enthält, dadurch gekennzeichnet, dass das schwergewichtige Material perlen- und/oder kugelförmige Teilchen aus einem oder mehreren Metallen und/oder Metallegierungen, inbegriffen Eisen und Stahl, umfasst, wobei der Durchmesser der Teilchen weniger als 250 µm beträgt.

2. Bohrflüssigkeit nach Anspruch 1, dadurch gekennzeichnet, dass das schwergewichtige Material Zinkteilchen sowie einen höheren Volumenanteil von mindestens einem anderen Metall umfasst.

3. Bohrflüssigkeit nach Anspruch 2, dadurch gekennzeichnet, dass das Durchmesser der Zinkteilchen weniger als 250 µm beträgt.

4. Bohrflüssigkeit nach Anspruch 2 oder 3, dadurch gekennzeichnet, dass die Zinkteilchen perlenförmig (schrotförmig) sind und durch elektrostatische Verdampfung und Kondensation hergestellt werden.

5. Bohrflüssigkeit nach Anspruch 2 oder 3, dadurch gekennzeichnet, dass die Zinkteilchen ellipsoidenförmig sind und durch Zusammenpressen von perlenförmigen (schrotförmigen) Teilchen hergestellt werden.

6. Bohrflüssigkeit nach einem der Ansprüche 1 bis 3, dadurch gekennzeichnet, dass die perlenförmigen Teilchen durch fluidische Atomisierung hergestellt werden.

7. Bohrflüssigkeit nach einem der Ansprüche 1 bis 3, dadurch gekennzeichnet, dass die perlenförmigen Teilchen durch mechanische Atomisierung hergestellt werden.

8. Bohrflüssigkeit nach Anspruch 6 oder 7, dadurch gekennzeichnet, dass die perlenförmigen Teilchen nach ihrer Herstellung zu einer Ellipsoidenform zusammengepresst werden.

9. Bohrflüssigkeit nach einem der Ansprüche 1 bis 3, dadurch gekennzeichnet, dass die kugelförmigen Teilchen durch Atomisierung mit Gasen, insbesondere Dampf, hergestellt werden.

10. Bohrflüssigkeit nach einem der Ansprüche 1 bis 3, dadurch gekennzeichnet, dass die kugelförmigen Teilchen zu einer Ellipsoidenform zusammengepresst werden.

11. Bohrflüssigkeit nach Anspruch 1 oder 2, dadurch gekennzeichnet, dass der Durchmesser der Teilchen zwischen 15 und 75 µm liegt.

12. Bohrflüssigkeit nach einem der vorangehenden Ansprüche, dadurch gekennzeichnet, dass die Oberfläche der Metallteilchen mit Chemikalien beschichtet ist, um die Eigenschaften der Teilchen bezüglich des Ausschwimmens zu verbessern.

## Revendications

1. Fluide de forage destiné au forage de puits dans des formations souterraines et contenant du matériau pondéreux comportant des particules d'un ou plusieurs métaux, caractérisé en ce que le matériau pondéreux comprend des particules en forme de perles et/ou de billes d'un ou plusieurs métaux et/ou alliages métalliques y compris fer et acier, le diamètre des particules étant inférieur à 250 µm.

2. Fluide de forage selon la revendication 1, caractérisé en ce que le matériau pondéreux comprend des particules de zinc et au moins un autre métal en une proportion en volume supérieure.

3. Fluide de forage selon la revendication 2, caractérisé en ce que le diamètre des particules de zinc est inférieur à 250 µm.

4. Fluide de forage selon la revendication 2 ou 3, caractérisé en ce que les particules de zinc sont en forme de perles (grenaille) et sont produites par évaporation électrostatique et condensation.

5. Fluide de forage selon la revendication 2 ou 3, caractérisé en ce que les particules de zinc sont en forme d'ellipsoïdes et sont produites en pressant ensemble des particules en forme de perles (grenaille).

6. Fluide de forage selon l'une des revendications 1 à 3, caractérisé en ce que les particules en forme de perles sont produites par atomisation fluide.

7. Fluide de forage selon l'une des revendications 1 à 3, caractérisé en ce que les particules en forme de perles sont produites par atomisation mécanique.

8. Fluide de forage selon la revendication 6 ou 7, caractérisé en ce que les particules en forme de perles sont, après avoir été produites, pressées ensemble pour leur donner une forme ellipsoïdale.

9. Fluide de forage selon l'une des revendications 1 à 3, caractérisé en ce que les particules en forme de billes sont produites par atomisation au moyen de gaz, en particulier de vapeur.

10. Fluide de forage selon l'une des revendications 1 à 3, caractérisé en ce que les particules en forme de billes sont pressées ensemble pour leur donner une forme ellipsoïdale.

11. Fluide de forage selon la revendication 1 ou 2, caractérisé en ce que le diamètre des particules est de 15 à 75 µm.

12. Fluide de forage selon l'une des revendications précédentes, caractérisé en ce que la surface des particules de métal est recouverte d'une couche de produits chimiques afin d'améliorer les propriétés de flottation des particules.